# FASCICULE DE BREVET EUROPEEN

(11) **EP 0 485 262 B1**
(45) Date de publication et mention de la délivrance du brevet: **15.05.1996**
(21) Numéro de dépôt: 91402923.6
(22) Date de dépôt: 31.10.1991
(51) Int. Cl.: C01B 39/00, C11D 3/12

(54) **Procédé de préparation de zéolithe 4A cristallisée**
Verfahren zur Herstellung von kristallisiertem Zeolith des 4A-Typs
Process for preparing crystallized 4A zeolite

(30) Priorité: 09.11.1990 FR 9013904
(43) Date de publication de la demande: 13.05.1992
(73) Titulaire: ENICHEM AUGUSTA INDUSTRIALE S.r.l., I-20124 Milano (IT)
(72) Inventeur: Bretaudeau, Dominique, I-57100 Livourne (IT); Delprato, François, F-93300 Aubervilliers (FR); Malassis, Marc, F-13600 La Ciotat (FR)
(74) Mandataire: Fusina, Gerolamo

(56) Documents cités:
- EP-A- 0 149 929
- FR-A- 2 324 576
- FR-A- 2 392 932
- GB-A- 2 043 043

## Description

La présente invention a pour objet un procédé de préparation de zéolithe 4A cristallisée, à forte capacité d'échange des ions calcium et l'application de la zéolithe obtenue comme adjuvant ("builder") dans les compositions détergentes.

Selon l'invention il s'agit d'un procédé continu de préparation de zéolithe 4A cristallisée, par mélange direct à une température supérieure à la température ordinaire d'une solution aqueuse de silicate de sodium et d'une solution aqueuse d'aluminate de sodium dans un réacteur non agité, formation d'un hydrogel, cristallisation à une température supérieure à la température ordinaire, lavage, filtration, et éventuellement séchage, procédé caractérisé en ce que :
- les solutions aqueuses de silicate et d'aluminate de sodium sont introduites en continu dans le réacteur non agité,
   . avec des débits respectifs tels que le rapport débit de solution d'aluminate/débit de solution de silicate soit compris entre environ 4 et 8 et de préférence entre environ 5 et 7.
   . et selon des quantités telles que la composition de l'hydrogel formé soit constante et réponde à la formule suivante exprimée en fractions molaires
      x SiO₂ ; y Al₂ O₃ ; zNa₂ O ; t H₂ O
      avec 0,5 <x/y< 3 et de préférence 1 <x/y< 2
      2 <z/y< 7 et de préférence 3 <z/y< 6
      50 <t/y< 400 et de préférence 75 <t/y< 200
- l'hydrogel formé est mis en présence d'un pied de cuve constitué d'une solution aqueuse d'aluminate de sodium contenant de l'ordre de 2 à 7 % en poids, de préférence de l'ordre de 3 à 6 % en poids d'Al₂ O₃ et de l'ordre de 8 à 14 %, de préférence de l'ordre de 9 à 13 % en poids de Na₂O, ledit pied de cuve étant présent en quantité telle que le produit formé par critallisation corresponde à la formule suivante exprimée en fractions molaires :
   x' SiO₂ ; y'Al₂ O₃ ; z'Na₂O ; t'H₂O
   avec 1,5 <x'/y'< 3 et de préférence 1,8 <x'/y'< 2,1
   0,5 <z'/y'< 1,5 et de préférence 0,8 <z'/y'< 1,2
   3 <t'/y'< 6 et de préférence 4 <t'/y'< 5
L'opération de mélange direct peut être réalisée dans tout réacteur non agité dont la géométrie permet d'obtenir une vitesse linéaire du mélange des solutions de silicate et d'aluminate de l'ordre de 7 à 15 m/s, par exemple un réacteur tubulaire, de type Venturi notamment.

Cette phase de mélange est effectuée à une température supérieure à la température ordinaire ; elle est favorablement réalisée par introduction d'une solution de silicate de sodium dont la température est de l'ordre de 40 à 90°C, de préférence de l'ordre de 50 à 80°C et d'une solution d'aluminate de sodium à une température de l'ordre de 40 à 100°C, de préférence de l'ordre de 50 à 90°C.

Cette phase de mélange dure généralement de l'ordre de 1 à 60 secondes.

L'hydrogel formé à l'extrémité du réacteur non agité se déverse dans un réacteur ouvert agité (par exemple un réacteur muni d'une pale d'agitation douce, d'une ancre ...).

Un pied de cuve d'aluminate de sodium en solution aqueuse a été préalablement introduit dans ledit réacteur agité ; la solution d'aluminate constituant le pied de cuve peut représenter de l'ordre de 5 à 20 % de la quantité totale d'aluminate nécessaire à la synthèse hydrothermale pour obtenir le produit recherché.

La température dudit pied de cuve est généralement de l'ordre de 50 à 110°C, de préférence de l'ordre de 50 à 100°C.

L'opération de cristallisation se déroule à une température qui est la résultante des températures des trois fluides précédents ; celle-ci est généralement de l'ordre de 45 à 95°C. L'inertie du système fait que cette température peut se maintenir pendant une durée de cristallisation pouvant aller de 30 mn à 30 heures suivant la température desdits fluides et le volume du pied de cuve. Toutefois, si nécessaire, des moyens de chauffage du réacteur de cristallisation peuvent être prévus.

Pendant la phase de cristallisation le mélange réactionnel peut être recyclé par l'intermédiaire d'une pompe (pour améliorer l'homogénéité du système) soit en permanence soit de manière séquentielle.

Après cristallisation, le produit recueilli est filtré, lavé à l'eau déminéralisée pour éliminer l'excès de soude et d'aluminate de sodium, puis séché jusqu'à contenir environ 20 % d'eau libre.

La zéolithe obtenue correspond sous forme anhydre à la formule 2 SiO₂ Al₂O₃ Na₂O. Elle est d'une grande pureté phasique (quasi absence d'hydroxysodalite).

Elle se présente sous forme d'une poudre dont le diamètre moyen est de l'ordre de 0,5 à 5 microns, à haute capacité et cinétique d'échange des ions calcium, ce qui la rend particulièrement intéressante comme adjuvant ("builder") en détergence.

Les exemples suivants sont donnés à titre indicatif et ne peuvent être considérés comme une limite du domaine et de l'esprit de l'invention.

### EXEMPLE 1

Dans un tube Venturi, dont la géométrie permet d'obtenir une vitesse linéaire des flux de 11 m/s, ou introduit
. avec un débit de 90m³/h, 19,5m³ d'une solution aqueuse d'aluminate de sodium contenant 4,95 % en poids de Al₂O₃ et 11,16 % en poids de Na₂O, à une température de 59°C,
. et, avec un débit de 14,3 m³/h, 2,93 m³ d'une solution aqueuse de silicate de sodium contenant 28,2 % en poids de SiO₂ et 14,7 % en poids de Na₂O, à une température de 58,3°C.

L'hydrogel ainsi formé se déverse dans un cristalliseur de 25 m³ agité à l'aide d'une ancre et renfermant 3,5 m³ d'une solution aqueuse d'aluminate de sodium contenant 4,95 % en poids de Al₂O₃ et 11,16 % en poids de Na₂O, à une température de 87°C.

Le mélange réactionnel dont la température atteint 66°C (sans apport exterieur de chaleur) est maintenu sous agitation douce pendant 240 mn.

La suspension obtenue est ensuite filtrée sur un filtre du type Pannevis ® (commercialisé par PANNEVIS) et lavée une première fois avec une solution aqueuse de soude à 0,05 % en poids et une deuxième fois avec de l'eau déminéralisée, le volume total de solution et d'eau étant de 5 m³.

Le slurry obtenu présentant un extrait sec de 52 % est ensuite séché dans un appareil du type Spin-Flash.

La poudre obtenue est une zéolithe 4A du type LTA présentant :
. une cristallinité de 99 %,
. un diamètre moyen de 1,9 micron ; aucuns cristaux de taille supérieure à 11 microns n'ont été observés,
. une perte au feu à 800°C de 19,48 %,
. une capacité d'échange des ions calcium de 299 mg de CaCO₃/g de zéolithe anhydre.

La capacité d'échange a été déterminée au bout de 15 mn, en milieu NaCl 3g/l, au moyen d'une électrode spécifique au calcium (ORION-93-20). La concentration initiale en calcium utilisée est de 5 x 10⁻³ mol 1⁻¹ et la concentration en zéolithe de 1g (anhydre)/l. La température est de 25°C.

### EXEMPLE2

On répète l'opération décrite à l'exemple 1 en y apportant toutefois les modifications suivantes :

### Introduction des solutions dans le tube Venturi

. 16,5 m³ de solution d'aluminate de sodium (5,1% en poids d'Al₂O₃ et 12,24 % en poids de Na₂O) à 76°C avec un débit de 78 m³/h,
. 2,8 m³ de solution de silicate de sodium (29,9 % en poids de SiO₂ et 14,9 % en poids de Na₂O) à 74°C avec un débit de 12,3 m³/h.

### Cristallisation

. pied de cuve : 3,4 m³ de solution d'aluminate de sodium (5,1 % en poids d'Al₂O₃ et 12,24 % de Na₂O) à 72,4°C
. température (sans apport extérieur) : 77,4°C
. temps de séjour : 60 mn

### Caractéristiques de la zéolithe

. zéolithe 4A de type LTA
. cristallinité : 95 %
. diamètre moyen des particules : 2,58 microns
. perte au feu à 800°C : 19,7 %
. capacité d'échange des ions de calcium : 295 mg CaCO₃/g

### EXEMPLE 3

On répète l'opération décrite à l'exemple 1 en y apportant toutefois les modifications suivantes :

### Introduction des solutions dans le tube Venturi

. 17,1 m³ de solution aqueuse d'aluminate de sodium (5,3% en poids d'Al₂O₃ et 11,17 % en poids de Na₂O) à 80,5°C avec un débit de 50 m³/h
. 2,9 m³ de solution de silicate de sodium (30,3 % en poids de SiO₂ et 14,7 % en poids de Na₂O) à 79,2°C avec un débit de 7,9 m³/h

### Cristallisation

. pied de cuve : 3,3 m³ de solution d'aluminate de sodium (5,3 % en poids d'Al₂O₃ et 11,17 % en poids de Na₂O) à 80°C.
. température (sans apport extérieur) : 83,7°C
. le mélange réactionnel est recyclé pendant la phase de cristallisation à l'aide d'une pompe avec un débit voisin de 100m³/h afin d'améliorer l'homogénéité du système
. temps de séjour : 150 mn

### Caractéristique de la zéolithe

. zéolithe 4A de type LTA
. cristallinité : 95 %
. diamètre moyen de particules : 3,2 microns avec un diamètre maximun de 15 microns
. perte au feu de 800°C : 19,9 %
. capacité d'échange des ions calcium : 300 mg CaCO₃/g

### EXEMPLE 4 (comparatif)

On répète l'opération décrite à l'exemple 1 en y apportant toutefois les modifications suivantes

### Introduction des solutions dans le tube Venturi

. 9 m³ de solution d'aluminate de sodium (5,7 % en poids de Al₂O₃ et 12,4 % en poids de Na₂O) à 64,5°C avec un débit de 82 m³/h
. 1,4 m³ de solution de silicate de sodium (28,6 % en poids de Al₂O₃ et 14,34 % en poids de Na₂O) à 75,5°C avec un débit de 13,9 m³/h

### Cristallisation

- absence de pied de cuve
- température de cristallisation initiale : 68°C
- temps de séjour : 22 heures ; la température chute jusqu'à 55°C environ pendant cette période
On constate qu'un long temps de séjour est nécessaire à la bonne cristallisation du produit (22 heures au lieu de 1 à 4 heures dans les exemples précédents).

Il a également été constaté que le produit filtre moins bien car il est moins fluide.

### Caractéristisques de la zéolithe

- zéolithe 4A de type LTA
- cristallinité : 99 %
   . diamètre moyen : 1,8 micron
   . perte au feu à 800°C : 26 %
   . capacité d'échange des ions calcium : 306 mgCaCO₃/g

### EXEMPLE 5

On répète l'opération décrite à l'exemple 1 en y apportant toutefois les modifications suivantes :

### Introduction des solutions dans le tube Venturi

. 62,5 litres de solution d'aluminate de sodium (11,58 %en poids d'Al₂O₃ et 5,3 % en poids de Na₂O) à 62,3°C avec un débit de 375 l/h
. 10 l de solution de silicate de sodium (28,6 % en poids de SiO₂ et 15,2 % en poids de Na₂O) à 62,6°C avec un débit de 60 l/h

### Cristallisation

. cristalliseur de 100 litres avec un agitateur à ancre
. pied de cuve : 10,5 l de solution d'aluminate de sodium (11,58 % en poids d'Al₂O₃ et 5,3 % en poids de Na₂O) à 80 °C
. température (avec apport extérieur) : maintenue à 75 °C
. temps de séjour : 75 mn

### Caractéristiques du produit

. zéolithe 4A de type LTA
. cristallinité : 99 %
. diamètre moyen :6,3 microns
. perte au feu à 800°C : 17,65 %
. capacité d'échange en ions calcium : 308 mg CaCO₃/g

## Revendications

1. Procédé continu de préparation de zéolithe 4A cristallisée par mélange direct à une température supérieure à la température ordinaire d'une solution aqueuse de silicate de sodium et d'une solution aqueuse d'aluminate de sodium dans un réacteur non agité, formation d'un hydrogel, cristallisation à une température supérieure à la température ordinaire, lavage, filtration et éventuellement séchage, procédé caractérisé en ce que :
- les solutions aqueuses de silicate et d'aluminate de sodium sont introduites en continu dans le réacteur non agité,
. avec des débits respectifs tels que le rapport débit de solution d'aluminate/débit de solution de silicate soit compris entre environ 4 et 8.
. et selon des quantités telles que la composition de l'hydrogel formé soit constante et réponde à la formule suivante exprimée en fractions molaires
x SiO₂ ; y Al₂O₃ ; zNa₂O ; t H₂O
avec 0,5 <x/y< 3
2 <z/y< 7
50 <t/y< 400
- l'hydrogel formé est mis en présence d'un pied de cuve constitué d'une solution aqueuse d'aluminate de sodium contenant de l'ordre de 2 à 7 % en poids d'Al₂ O₃ et de l'ordre de 8 à 14 % en poids Na₂O, ledit pied de cuve étant présent en quantité telle que le produit formé par cristallisation corresponde à la formule suivante exprimée en fractions molaires :
x'SiO₂ ; y'Al₂O₃ ; z'Na₂O ; t'H₂O
avec 1,5 <x'/y'< 3
0,5 <z'/y'< 1,5
3 <t'/y'< 6

2. Procédé selon la revendication 1 caractérisé en ce que :
- le rapport débit de solution d'aluminate/débit de solution de silicate est compris entre environ 5 et 7.
- la composition de l'hydrogel formé répond à la formule suivante exprimée en fractions molaires
x SiO₂ ; y Al₂ O₃ ; z Na₂ O ; t H₂ O
avec 1 <x/y< 2
3 <z/y< 6
75 <t/y< 200
- le pied de cuve contient de l'ordre de 3 à 6 % en poids d'Al₂ O₃ et de l'ordre de 9 à 13 % en poids Na₂ O.
- le produit formé par cristallisation correspond à la formule suivante exprimée en fractions molaires :
x' SiO₂ ; y' Al₂ O₃ ; z' Na₂ O ; t' H₂ O
avec 1,8 <x'/y'< 2,1
0,8 <z'/y'< 1,2
4 <t'/y'< 5

3. Procédé selon la revendication 1 ou 2 caractérisé en ce que :
- l'opération de mélange direct est réalisée dans un réacteur non agité dont la géométrie permet d'obtenir une vitesse linéaire du mélange des solutions de silicate et d'aluminate de l'ordre de 7 à 15 m/s.

4. Procédé selon l'une quelconque des revendications précédentes caractérisé en ce que l'opération de mélange direct est réalisée par introduction d'une solution de silicate de sodium dont la température est de l'ordre de 40 à 90°C, et d'une solution d'aluminate de sodium à une température de l'ordre de 40 à 100°C.

5. Procédé selon l'une quelconque des revendications précédentes caractérisé en ce que la solution d'aluminate de sodium constituant le pied de cuve représente de l'ordre de 5 à 20 % de la quantité totale d'aluminate nécessaire à la synthèse hydrothermale pour obtenir le produit recherché.

6. Procédé selon l'une quelconque des revendications précédentes caractérisé en ce que la température du pied de cuve est de l'ordre de 50 à 110°C

7. Procédé selon l'une quelconque des revendications précédentes caractérisé en ce que la température de cristallisation est de l'ordre de 45 à 95 °C

8. Utilisation des zéolithes 4A cristallisées obtenues selon le procédé faisant l'objet de l'une quelconque des revendications précédentes comme adjuvant ("builder") dans les compositions détergentes

## Claims

1. A continuous process for preparing crystallised 4A zeolite by directly mixing an aqueous sodium silicate solution and an aqueous sodium aluminate solution at a temperature above ordinary temperature in a non-agitated reactor, forming a hydrogel, followed by crystallisation at a temperature above ordinary temperature, washing, filtering and possibly drying, the said process being characterised in that:
- the aqueous sodium silicate and aluminate solutions are introduced continuously into the non-agitated reactor,
- with respective rates of flow such that the ratio of aluminate solution flow rate:silicate solution flow rate is comprised between approx. 4 and 8,
- and according to quantities such that the composition of the hydrogel formed is constant and satisfies the following formula expressed as molar functions
x SiO₂ ; y Al₂O₃ ; z Na₂O ; t H₂O
with 0.5 <x/y< 3
2 <z/y< 7
50 <t/y< 400
- the hydrogel formed is placed in the presence of a base constituted by an aqueous solution of sodium aluminate containing around 2 to 7% by weight Al₂O₃ and around 8 to 14% by weight Na₂O, the said base being present in such a quantity that the product formed by crystallisation corresponds to the following formula expressed in molar functions:
x'SiO₂ ; y'Al₂O₃ ; z'Na₂O l t'H₂O
with 1.5 <x'/y'< 3
0.5 <z'/y'< 1.5
3 <t'/y'< 6

2. A process according to claim 1, characterised in that:
- the ratio of the aluminate solution flow rate:silicate solution flow rate is comprised between approx. 5 and 7,
- the composition of the hydrogel formed responds to the following formula expressed in molar fractions
x SiO₂ ; y Al₂O₃ ; z Na₂O ; t H₂O
with 1 <x/y< 2
3 <z/y< 6
75 <t/y< 200
- the base contains around 3 to 6% by weight Al₂O₃ and around 9 to 13% by weight Na₂O
- the product formed by crystallisation corresponds to the following formula expressed in molar functions:
x'SiO₂ ; y'Al₂O3 ; z'Na₂O l t'H₂O
with 1.8 <x'/y'< 2.1
0.8 <z'/y'< 1.2
4 <t'/y'< 5

3. A process according to claim 1 or 2, characterised in that:
- the direct mixing operation is carried out in a non-agitated reactor the geometry of which makes it possible to obtain a linear velocity of the mixture of silicate and aluminate solution of around 7 to 15 m/s.

4. A process according to any one of the preceding claims, characterised in that the direct mixing operation is carried out by introducing a solution of sodium silicate the temperature of which is around 40 to 90°C, and a solution of sodium aluminate which is at a temperature of around 40 to 100°C.

5. A process according to any one of the preceding claims, characterised in that the sodium aluminate solution constituting the base represents around 5 to 20% of the total quantity of aluminate necessary for hydrothermal synthesis in order to obtain the product desired.

6. A process according to any one of the preceding claims, characterised in that the temperature of the base is around 50 to 110°C.

7. A process according to any one of the preceding claims, characterised in that the crystallization temperature is around 45 to 95°C.

8. Use of crystallised 4A zeolites obtained by the process which is the subject of any one of the preceding claims as an adjuvant ("builder") in detergent compositions.

## Patentansprüche

1. Kontinuierliches Verfahren zur Herstellung von kristallisiertem Zeolith des 4A-Typs durch direktes Mischen einer wäßrigen Natriumsilikat-Lösung und einer wäßrigen Natriumaluminat-Lösung bei einer Temperatur oberhalb der gewöhnlichen Temperatur in einem nicht umgerührten Reaktor, Bildung eines Hydrogels, Kristallisation bei einer Temperatur oberhalb der gewöhnlichen Temperatur, Waschen, Filtrieren und gegebenenfalls Trocknen, wobei das Verfahren dadurch gekennzeichnet ist, daß
- die wäßrigen Natriumsilikat- und -aluminat-Lösungen kontinuierlich dem nicht umgerührten Reaktor zugeführt werden,
- mit solchen jeweiligen Durchsätzen, daß das Verhältnis Durchsatz von Aluminatlösung / Durchsatz von Silikatlösung zwischen ungefähr 4 und 8 liegt,
- und gemäß solchen Mengen, daß die Zusammensetzung des gebildeten Hydrogels konstant ist und der folgenden, in Molverhältnissen ausgedrückten Formel entspricht:
x SiO₂ ; y Al₂O₃ ; z Na₂O ; t H₂O ,
mit 0,5 < x/y < 3 ,
2 < z/y < 7 ,
50 < t/y < 400 ;
- das gebildete Hydrogel in die Gegenwart einer Vorlage gebracht wird, die von einer in der Größenordnung von 2 bis 7 Gewichtsprozent Al₂O₃ und in der Größenordnung von 8 bis 14 Gewichtsprozent Na₂O enthaltenden wäßrigen Natriumaluminat-Lösung gebildet wird, wobei die Vorlage in einer solchen Menge vorhanden ist, daß das durch Kristallisation gebildete Produkt der folgenden, in Molverhältnissen ausgedrückten Formel entspricht:
x' SiO₂ ; y' Al₂O₃ ; z' Na₂O ; t' H₂O ,
mit 1,5 < x'/y' < 3 ,
0,5 < z'/y' < 1,5 ,
3 < t'/y' < 6 .

2. Verfahren nach Anspruch 1, dadurch gekennzeichnet, daß
- das Verhaltnis Durchsatz von Aluminatlösung / Durchsatz von Silikatlösung zwischen ungefähr 5 und 7 liegt;
- die Zusammensetzung des gebildeten Hydrogels der folgenden, in Molverhältnissen ausgedrückten Formel entspricht:
x SiO₂ ; y Al₂O₃ ; z Na₂O ; t H₂O ,
mit 1 < x/y < 2 ,
3 < z/y < 6 ,
75 < t/y < 200 ;
- die Vorlage in der Größenordnung von 3 bis 6 Gewichtsprozent Al₂O₃ und in der Größenordnung von 9 bis 13 Gewichtsprozent Na₂O enthält;
- das durch Kristallisation gebildete Produkt der folgenden, in Molverhältnissen ausgedrückten Formel entspricht:
x' SiO₂ ; y' Al₂O₃ ; z' Na₂O ; t' H₂O ,
mit 1,8 < x'/y' < 2,1 ,
0,8 < z'/y' < 1,2 ,
4 < t'/y' < 5 .

3. Verfahren nach einem der Ansprüche 1 oder 2, dadurch gekennzeichnet, daß
- der Vorgang des direkten Mischens in einem nicht umgerührten Reaktor durchgeführt wird, dessen Geometrie es erlaubt, eine lineare Geschwindigkeit des Gemisches der Silikat- und Aluminatlösungen in der Größenordnung von 7 bis 15 m/s zu erreichen.

4. Verfahren nach einem der voranstehenden Ansprüche, dadurch gekennzeichnet, daß der Vorgang des direkten Mischens durch Zuführen einer Natriumsilikat-Lösung, deren Temperatur in der Größenordnung von 40 bis 90°C liegt, und einer Natriumaluminat-Lösung bei einer Temperatur in der Größenordnung von 40 bis 100°C durchgeführt wird.

5. Verfahren nach einem der voranstehenden Ansprüche, dadurch gekennzeichnet, daß die die Vorlage bildende Natriumaluminat-Lösung in der Größenordnung von 5 bis 20 % der gesamten Aluminatmenge darstellt, die für die hydrothermale Synthese erforderlich ist, um das angestrebte Produkt zu erhalten.

6. Verfahren nach einem der voranstehenden Ansprüche, dadurch gekennzeichnet, daß die Temperatur der Vorlage in der Größenordnung von 50 bis 110°C liegt.

7. Verfahren nach einem der voranstehenden Ansprüche, dadurch gekennzeichnet, daß die Kristallisationstemperatur in der Größenordnung von 45 bis 95°C liegt.

8. Verwendung der gemäß dem Verfahren nach einem der voranstehenden Ansprüche erhaltenen kristallisierten Zeolithe des 4A-Typs als Gerüststoff ("Builder") in Waschmittelzusammensetzungen.
